# EUROPÄISCHE PATENTSCHRIFT

(11) **EP 0 615 588 B1**
(45) Veröffentlichungstag und Bekanntmachung des Hinweises auf die Patenterteilung: **23.08.1995**
(21) Anmeldenummer: 93920812.0
(22) Anmeldetag: 23.09.1993
(51) Int. Cl.: F16H 61/46, F03C 1/06, F04B 49/06

(54) **HYDROSTATISCHES GETRIEBE**
HYDROSTATIC TRANSMISSION
TRANSMISSION HYDROSTATIQUE

(30) Priorität: 15.10.1992 DE 4234826
(43) Veröffentlichungstag der Anmeldung: 21.09.1994
(73) Patentinhaber: BRUENINGHAUS HYDROMATIK GMBH, 89275 Elchingen (DE)
(72) Erfinder: STURM, Hermann, D-89012 Ulm (DE); HÖRMANN, Werner, D-89257 Illertissen (DE)
(74) Vertreter: Körber, Wolfhart, Dr.rer.nat.
(86) Internationale Anmeldenummer: EP9302590
(87) Internationale Veröffentlichungsnummer: WO9409293

(56) Entgegenhaltungen:
- EP-A- 0 467 440
- DE-A- 3 739 387
- PATENT ABSTRACTS OF JAPAN vol. 013, no. 065 (M-797)14. Februar 1989 & JP,A,63 266 201 (KOMATSU) 2. November 1988

## Beschreibung

Die Erfindung betrifft ein hydrostatisches Getriebe nach dem Oberbegriff des Patentanspruches 1.

Aus der Praxis sind derartige hydrostatische Getriebe für den Antrieb von Fahrzeugen bekannt, deren vom jeweiligen Fahrzeug-Antriebsmotor angetriebene Hydropumpe im Lastbetrieb je nach Fahrtrichtung über die eine oder die andere, jeweils als Vorlaufleitung dienende Arbeitsleitung zum Hydromotor fördert, um diesen und damit die Fahrzeug-Antriebsräder anzutreiben. Dabei baut sich in der Vorlaufleitung ein dem Antriebsmoment an den Fahrzeug-Antriebsrädern proportional er Arbeitsdruck auf.

Beim Wechsel vom Last- zum Schubbetrieb, wenn also der Antrieb des Hydromotors nicht durch die Hydropumpe erfolgt, sondern von den Fahrzeug-Antriebsrädern, etwa bei Bergabfahrt oder beim Bremsen des Fahrzeugs, übernommen wird, wechselt der Arbeitsdruck von der jeweiligen Vorlaufleitung zur jeweiligen Rücklaufleitung und bremst den Hydromotor und damit das Fahrzeug ab.

Dieser auch als Staudruck bezeichnete Arbeitsdruck ist der an den Fahrzeugrädern wirkenden Bremskraft proportional und kann bei unterschiedlichen Einsatzbedingungen des hydrostatischen Getriebes in unerwünschter Weise unterschiedliche Werte annehmen. So ändert sich die Bremskraft bei gleichbleibender Verdrängungsvolumen-Einstellung des Hydromotors mit dessen Drehzahl, die beispielsweise vom Durchmesser der Fahrzeug-Antriebsräder und vom Übersetzungsverhältnis eines zwischengeschalteten Getriebes abhängt, falls ein solches verwendet wird. Auch das maximale Bremsmoment, das der Fahrzeug-Antriebsmotor zur Verfügung stellen kann und das beispielsweise für Dieselmotoren kleiner als für Ottomotoren ist, sowie das Übersetzungsverhältnis eines ggfs. der Hydropumpe vorgeschalteten Getriebes beeinflussen die Bremskraft.

Es ist Aufgabe der Erfindung, ein hydrostatischen Getriebe der eingangs genannten Art so weiterzubilden, daß seine erzielbare Bremswirkung an unterschiedliche Einsatzbedingungen angepaßt werden kann.

Diese Aufgabe wird durch die kennzeichnenden Merkmale des Patentanspruches 1 gelöst, wobei mechanisch und hydraulisch verstellbare Positioniereinrichtungen nach dem ersten kennzeichnenden Merkmal an sich bereits aus der DE-AS-12 08 266, der DE-OS 37 29 495 und der Firmenschrift "Hydro-Gigant" der Constantin Rauch KG (siehe Hubbegrenzung) zum Verstellen des maximalen und/oder minimalen Verdrängungsvolumens von Hydropumpen bzw. Hydromotoren bekannt sind.
Die Verwendung einer solchen Positioniereinrichtung in Kombination mit der Steuereinrichtung nach dem zweiten kennzeichnenden Merkmal erlaubt es jedoch, die vom Hydromotor im Schubbetrieb des hydrostatischen Getriebes erzeugte Bremskraft an unterschiedliche Einsatzbedingungen anzupassen. Wenn das hydrostatische Getriebe durch einen Fahrzeug-Antriebsmotor nicht direkt, sondern über ein die Antriebskräfte stärker übersetzendes Getriebe angetrieben werden soll, ist es insbesondere bei leichten Fahrzeugen zur Vermeidung von blockierenden Fahrzeug-Antriebsrädern beim Bremsen vorteilhaft, eine der oder beide Verstellbereichsgrenzen in Richtung minimalen Verdrängungsvolumens des Hydromotors zu verstellen. Die Verstellung einer der oder beider Verstellbereichsgrenzen in Richtung Vergrößerung des Verdrängungsvolumens des Hydromotors ist hingegen günstig, wenn der Antrieb des hydrostatischen Getriebes durch beispielsweise einen Dieselmotor anstatt eines Ottomotors erfolgen soll oder wenn Fahrzeug-Antriebsräder mit größerem Durchmesser anzutreiben sind. Auch für den Fall, daß das Übersetzungsverhältnis eines der Hydropumpe vorgeschalteten oder dem Hydromotor nachgeschalteten Getriebes verringert wird, ist eine solche Verstellung einer der oder beider Verstellbereichsgrenzen in Richtung größeren Verdrängungsvolumens des Hydromotors vorteilhaft. Gemäß einer Weiterbildung der Erfindung entspricht die verstellbare Verstellbereichsgrenze der Stelleinrichtung der Einstellung des Hydromotors auf minimales Verdrängungsvolumen.
Bei einem hydrostatischen Getriebe, dessen Stelleinrichtung als Stellzylinder mit einem mit dem Stellglied des Hydromotors verbundenen Stellkolben ausgebildet ist, kann die Positioniereinrichtung ein Hilfs-Stellzylinder mit einem Hilfs-Stellkolben sein, der als Anschlag für den Stellkolben der Stelleinrichtung dient und mit einem das Stellsignal darstellenden Hilfsstelldruck in einer Hilfsstelldruckleitung beaufschlagbar ist.
Wenn das hydrostatische Getriebe mit einem mit ihm gekoppelten Getriebe mit veränderlichem Übersetzungsverhältnis eingesetzt werden soll, wird das Stellsignal vorzugsweise in Abhängigkeit vom jeweiligen Übersetzungsverhältnis des gekoppelten Getriebes durch die Steuereinrichtung eingestellt.

Hierbei kann der Stellzylinder in alternativer Ausführung zur indirekten Beaufschlagung über den Hilfs-Zylinder auch direkt mit dem Stellsignal in Form eines hydraulischen Drucks beaufschlagt werden.

Bei Ausbildung des gekoppelten Getriebes als mechanisches Stufengetriebe mit zwei Gangstufen ist die Steuereinrichtung vorzugsweise als Wegeventil mit einer Offen- und einer Schließstellung ausgebildet, das Arbeitsanschlüsse an die Hilfsstelldruckleitung aufweist, die in der Offenstellung geöffnet und in der Schließstellung gesperrt sind, und das über einen Steueranschluß mit einem die erste Gangstufe des mechanischen Getriebes kennzeichnenden Steuersignal in einer Steuersignalleitung in Richtung Schließstellung ansteuerbar ist. Der Steueranschluß kann hierbei ein hydraulisch ansteuerbarer Anschluß oder ein elektrisch ansteuerbarer Proportionalmagnet sein. In letzterem Fall kann die Sternersignalleitung, vorzugsweise über einen Mikrocontroller, zu einem Gangstufenschalter führen. Bei Verwendung eines Getriebes mit stufenlos veränderlichem Übersetzungsverhältnis hingegen ist es vorteilhaft, statt eines schaltenden ein drosselndes Wegeventil einzusetzen, das mit einem dem jeweiligen Übersetzungsverhältnis proportionalen Steuersignal ansteuerbar ist.

Der Mikrocontroller ist vorzugsweise über Schaltsignalleitungen mit Schaltantrieben zum Schalten des gekoppelten Getriebes in die erste und zweite Gangstufe verbunden.

Wenn das hydrostatische Getriebe ein in den Arbeitsleitungen angeordnetes, bei Schubbetrieb jeweils eine derselben zumindest teilweise schließendes Bremsventil umfaßt, ist eine Ausgestaltung vorteilhaft, gemäß welcher das Wegeventil zwei weitere Steueranschlüsse aufweist, deren einer über eine erste Steuerleitung mit den Arbeitsleitungsabschnitten zwischen dem Bremsventil und der Hydropumpe und deren anderer über eine zweite Steuerleitung mit den Arbeitsleitungsabschnitten zwischen dem Bremsventil und dem Hydromotor angeschlossen ist, wobei der Steuerdruck in der zweiten Steuerleitung das Wegeventil entgegen dem Steuerdruck in der ersten Steuerleitung in Richtung Offenstellung beaufschlagt.

Gemäß einer Weiterbildung der Erfindung ist die Stelleinrichtung mit einem Stelldruck in einer Stelldruckleitung beaufschlagbar, die über eine erste Stelldruckanschlußleitung an die Arbeitsleitungsabschnitte zwischen Bremsventil und Hydropumpe und über eine zweite Stelldruckanschlußleitung an die Arbeitsleitungsabschnitte zwischen Bremsventil und Hydromotor angeschlossen ist, wobei die erste Steuerleitung an die erste Stelldruckanschlußleitung und die zweite Steuerleitung an die zur zweiten Stelldruckanschlußleitung führende Hilfsstelldruckleitung angeschlossen ist.

Nachstehend ist das hydrostatische Getriebe gemäß der Erfindung anhand eines bevorzugten Ausführungsbeispiels unter Bezugnahme auf den Schaltplan der einzigen beigefügten Figur näher beschrieben.

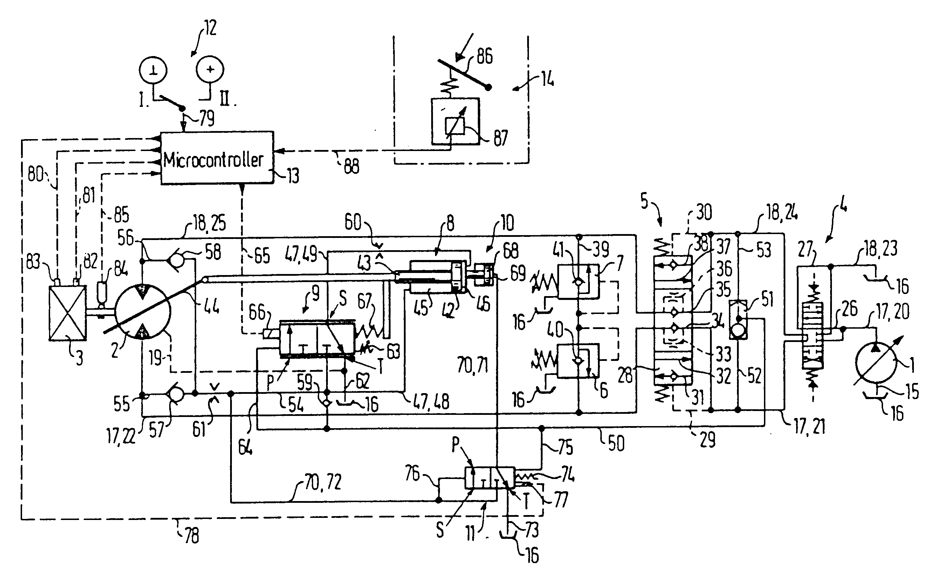

Die Figur zeigt ein als Fahrantrieb für ein Fahrzeug vorgesehenes hydrostatisches Getriebe, das mit offenem Kreislauf ausgebildet ist, jedoch auch einen geschlossenen Kreislauf aufweisen kann. Es umfaßt eine verstellbare Hydropumpe 1 mit einer Förderrichtung, einen verstellbaren Hydromotor 2 mit zwei Förderrichtungen, ein dem Hydromotor 2 nachgeschaltetes mechanisches Lastschaltgetriebe 3 mit zwei Gangstufen, ein Fahrtrichtungsventil 4 zur Umsteuerung der Drehrichtung des Hydromotors 2 und damit der Fahrtrichtung des Fahrzeuges, eine hydraulische Bremseinrichtung bestehend aus einem Bremsventil 5 und zwei zugeordneten Druckbegrenzungsventilen 6,7, eine mit einem Stelldruck beaufschlagbare Stelleinrichtung 8, die einen von zwei Verstellbereichsgrenzen begrenzten Verstellbereich aufweist und zur Einstellung des Verdrängungsvolumens des Hydromotors 2 vorgesehen ist, ein Regelventil 9 zur Regelung dar Stelldruckbeaufschlagung der Stelleinrichtung 8, eine mit einem Stellsignal in Form eines Hilfsstelldrucks beaufschlagbare Positioniereinrichtung 10 zum Verstellen einer der Verstellbereichsgrenzen des Verstellbereichs der Stelleinrichtung 8, eine Steuereinrichtung 11 zur Steuerung der Hilfsstelldruckbeaufschlagung der Positioniereinrichtung 10 in Abhängigkeit von der jeweils eingelegten Gangstufe des mechanischen Getriebes 3, einen Gangstufenschalter 12 zur Vorgabe der jeweiligen Gangstufe des mechanischen Getriebes 3, einen programmierbaren Mikrocontroller 13 sowie eine Inchpedaleinrichtung 14.

Die Hydropumpe 1 ist über eine Saugleitung 15 an den Tank 16 angeschlossen und von einer nicht dargestellten Antriebsquelle, z.B. einem Dieselmotor, antreibbar. Der Hydromotor 2 ist über eine erste Arbeitsleitung 17 an die Hydropumpe 1 und über eine zweite Arbeitsleitung 18 sowie über eine Leckölleitung 19 an den Tank 16 angeschlossen. Er ist mit dem Lastschaltgetriebe 3 für den Antrieb der nicht gezeigten Fahrzeugräder mechanisch gekoppelt.

Das Fahrtrichtungsventil 4 und das Bremsventil 5 sind in beiden Arbeitsleitungen 17,18, das erstere Ventil näher zur Hydropumpe 1 und das letztere Ventil näher zum Hydromotor 2, angeordnet. Die Leitungsabschnitte der ersten Arbeitsleitung 17 zwischen der Hydropumpe 1 und dem Fahrtrichtungsventil 4, zwischen dem Fahrtrichtungsventil 4 und dem Bremsventil 5 sowie zwischen dem Bremsventil 5 und dem Hydromotor 2 sind mit den Bezugszeichen 17,20; 17,21 und 17,22 und die entsprechenden Leitungsabschnitte der zweiten Arbeitsleitung 18 mit den Bezugszeichen 18,23; 18,24 und 18,25 bezeichnet.

Das Fahrtrichtungsventil 4 ist ein willkürlich betätigbares 6/3-Wegeventil mit den Schaltstellungen: Vorwärtsfahrt, Leerlauf und Rückwärtsfahrt. Es weist dementsprechend je einen Anschluß an die Arbeitsleitungsabschnitte 17,20; 17,21; 18,23 und 18,24 sowie zwei weitere Anschlüsse auf, deren einer pumpenseitig über ein Leitungsstück 26 an den Arbeitsleitungsabschnitt 17,20 und motorseitig über ein Leitungsstück 27 an den Arbeitsleitungsabschnitt 18,23 angeschlossen ist.

In der in der Figur gezeigten Leerlaufstellung des Fahrtrichtungsventils 4 sind die beiden Anschlüsse an die Leitungsstücke 26 und 27 sowie die beiden motorseitigen Anschlüsse an die Arbeitsleitungsabschnitte 17,21 und 18,24 jeweils miteinander verbunden, während die verbleibenden zwei Anschlüsse gesperrt sind. In dieser Leerlaufstellung fördert die Hydropumpe 1 in den Tank 16, während der Hydromotor 2 auf Umlauf geschaltet ist.

In der in der Figur oberen Schaltstellung, d.h. bei nach unten verschobenem Kolben des Fahrtrichtungsventils 4, ist die Verbindung zwischen den beiden Anschlüssen an die Arbeitsleitungsabschnitte 17,20 und 17,21 sowie zwischen den Anschlüssen an die Arbeitsleitungsabschnitte 18,23 und 18,24 hergestellt, während die beiden verbleibenden Anschlüsse gesperrt sind. Diese obere Schaltstellung des Fahrtrichtungsventils 4 entspricht der Vorwärtsfahrt des Fahrzeugs; der Druckmittelvorlauf von der Hydropumpe 1 zum Hydromotor 2 erfolgt über die erste Arbeitsleitung 17 und der Druckmittelrücklauf zum Tank 16 über die zweite Arbeitsleitung 18.

In der in der Figur unteren Schaltstellung des Fahrtrichtungsventils 4 sind die Verbindungen der in der oberen Schaltstellung offenen Anschlüsse miteinander vertauscht, so daß das Fahrzeug auf Rückwärtsfahrt eingestellt ist. Dementsprechend erfolgt der Druckmittelvorlauf über die Arbeitsleitungsabschnitte 17,20; 18,24 und 18,25 und der Rücklauf über die Arbeitsleitungsabschnitte 17,22; 17,21 und 18,23.

Das Bremsventil 5 ist ein stetig verstellbares 4/3-Wegeventil, dessen Steuerkolben 28 durch Federzentrierung in der in der Figur gezeigten Mittel- oder Bremsstellung gehalten und durch hydraulische Beaufschlagung in Richtung einer in der Figur unteren und oberen Endstellung verstellbar ist. Die hydraulische Beaufschlagung erfolgt an beiden Stirnseiten des Steuerkolbens 28 über je eine an die Arbeitsleitungsabschnitte 17,21 bzw. 18,24 angeschlossene Leitung 29 bzw. 30. Das Bremsventil 5 umfaßt je einen Anschluß an die Arbeitsleitungsabschnitte 17,21; 17,22; 18,24 und 18,25 sowie acht Durchflußkanäle 31 bis 38. Die Durchflußkanäle 33 und 36 weisen je einen gegenüber den Arbeitsleitungen 17,18 sowie den verbleibenden Durchflußkanälen verringerten, drosselnden Querschnitt auf. In den Durchflußkanälen 31, 34, 35 und 38 ist je ein in Richtung Hydropumpe 1 sperrendes Rückschlagventil angeordnet, während die verbleibenden Durchflußkanäle in beiden Richtungen durchströmbar sind. In der Bremsstellung des Bremsventils 5 stehen die beiden Anschlüsse an die Arbeitsleitungsabschnitte 17,21 und 17,22 über die Durchflußkanäle 33 und 34 in Verbindung, während die beiden Anschlüsse an die Arbeitsleitungsabschnitte 18,24 und 18,25 über die Durchflußkanäle 35 und 36 miteinander verbunden sind. Die gleichen Anschlüsse stehen in der unteren Endstellung des Bremsventils 5 über die Durchflußkanäle 31 bzw. 32 und in der oberen Endstellung über die Durchflußkanäle 37 bzw. 38 in Verbindung.

Die einstellbaren Druckbegrenzungsventile 6,7 sind in einer die Arbeitsleitungsabschnitte 17,22 und 18,25 verbindenden Leitung 39 angeordnet. Zwei in entgegengesetzten Richtungen sperrende Rückschlagventile 40 bzw. 41 sind in je einem die Druckbegrenzungsventile 6,7 umgehenden Bypaß angeordnet.

Die Stelleinrichtung 8 besteht aus einem doppeltwirkenden Stellzylinder mit einem Differentialkolben 42, der zwischen zwei Verstellbereichsgrenzen verstellbar und über eine Kolbenstange 43 mit einem Stellglied 44 zur Verstellung des Verdrängungsvolumens des Hydromotors 2 gekoppelt ist. Die in der Figur rechte Verstellbereichsgrenze entspricht der Einstellung des Hydromotors 2 auf minimales Verdrängungsvolumen und die in der Figur linke Verstellbereichsgrenze, gebildet von der von der Kolbenstange 43 durchsetzten Stirnwand des Stellzylinders, der Einstellung auf maximales Verdrängungsvolumen. Der Differentialkolben 43 definiert mit seiner kleineren, ringförmigen Stirnfläche einen von der Kolbenstange 43 durchsetzten ersten Druckraum 45 sowie mit seiner gegenüberliegenden, größeren, kreisförmigen Stirnfläche einen zweiten Druckraum 46. Der erste Druckraum 45 und der zweite Druckraum 46 sind miteinander über eine Stelldruckleitung 47 verbunden, in der das Regelventil 9 angeordnet ist. Der Leitungsabschnitt der Stelldruckleitung 47 zwischen dem ersten Druckraum 45 und dem Regelventil 9 ist mit dem Bezugszeichen 47,48 und der Leitungsabschnitt zwischen dem zweiten Druckraum 46 und dem Regelventil 9 ist mit dem Bezugszeichen 47,49 bezeichnet. Der Leitungsabschnitt 47,48 ist über eine erste Stelldruckanschlußleitung 50 mit einem Wechselventil 51 und zwei Zweigleitungen 52,53 an die Arbeitsleitungsabschnitte 17,21 und 18,24 und über eine zweite Stelldruckanschlußleitung 54 mit zwei Zweigleitungen 55,56 an die Arbeitsleitungsabschnitte 17,22 und 18,25 angeschlossen. In den Zweigleitungen 55,56 ist je ein in Richtung der Arbeitsleitungsabschnitte 17,22 und 18,25 sperrendes Rückschlagventil 57,58 angeordnet. In der ersten Stelldruckanschlußleitung 50 zwischen deren Einmündung in den Stelldruckleitungsabschnitt 47,48 und dem Wechselventil 51 ist ein in Richtung desselben sperrendes Rückschlagventil 59 angeordnet. Im Stelldruckleitungsabschnitt 47,49 und in der zweiten Stelldruckleitung 54 zwischen deren Einmündung in den Stelldruckleitungsabschnitt 47,48 und den Zweigleitungen 55,56 ist je eine Drosselstelle 60 bzw. 61 angeordnet.

Das Regelventil 9 ist ein stetig verstellbares 3/2-Wegeventil mit zwei Arbeitsanschlüssen P und S an die Stelldruckleitungsabschnitte 47,48 bzw. 47,49 und mit einem Arbeitsanschluß T an ein in die Leckölleitung 19 einmündendes und auf diese Weise zum Tank 16 führendes Leitungsstück 62. Das Regelventil 9 ist durch die Kraft einer einstellbaren Feder 63 in der in der Figur gezeigten (linken) Ausgangsstellung gehalten und durch einen hydraulischen Druck in einer an die erste Stelldruckanschlußleitung 50 zwischen dem Rückschlagventil 59 und dem Wechselventil 51 angeschlossenen Stelldruckzweigleitung 64 sowie durch einen über eine Steuersignalleitung 65 an den Mikrocontroller 13 angeschlossenen Proportionalmagneten 66 gegen die Kraft der Feder 63 in Richtung (rechte) Endstellung betätigbar. In der Ausgangsstellung des Regelventils 9 ist der Anschluß P gesperrt, während die beiden verbleibenden Anschlüsse S und T miteinander verbunden sind. Im Regelbereich, d.h. in sämtlichen Regelstellungen einschließlich der Endstellung, ist der Tankanschluß T gesperrt, während die verbleibenden Anschlüsse P und S miteinander verbunden sind. Das Regelventil 9 ist ferner durch eine mit der Kolbenstange 43 der Stelleinrichtung 8 gekoppelte Wegmeßfeder 67 in Richtung Ausgangsstellung beaufschlagt.

Die Positioniereinrichtung 10 besteht aus einem zwecks Unterscheidung gegenüber dem Stellzylinder der Stelleinrichtung 8 als Hilfs-Stellzylinder bezeichneten einfachwirkenden Stellzylinder, dessen Hilfs-Stellkolben 68 die in der Figur rechte Stirnwand des Stellzylinders der Stelleinrichtung 8 zwischen einer Ausgangs- und einer Endstellung verschiebbar durchsetzt und als verstellbarer Anschlag für den Differentialkolben 42 und somit zur Verstellung der dem minimalen Verdrängungsvolumen entsprechenden Verstellbereichsgrenze der Stelleinrichtung 8 dient. Der Hilfs-Stellkolben 68 definiert mit seiner größeren, kreisrunden Stirnfläche einen Druckraum 69, der über eine Hilfsstelldruckleitung 70 an die zweite Stelldruckanschlußleitung 54 zwischen deren Einmündung in den Stelldruckleitungsabschnitt 47,48 und der Drosselstelle 61 angeschlossen ist. In der Ausgangsstellung ist der Hilfs-Stellkolben 68 vollständig in den Hilfs-Stellzylinder eingefahren und schließt mit der in der Figur rechten Stirnwand des Stellzylinders der Stelleinrichtung 8 bündig ab. Diese Stirnwand definiert die der Einstellung des Hydromotors 2 auf ein minimales Verdrängungsvolumen entsprechende (erste rechte) Verstellbereichsgrenze. In der Endstellung ist der Hilfs-Stellkolben 68 völlig aus dem Hilfs-Stellzylinder aus- und in den zweiten Druckraum 46 der Stelleinrichtung 8 eingefahren und definiert somit eine (zweite rechte) Verstellbereichsgrenze, die einer Einstellung des Hydromotors 2 auf ein minimales Verdrängungsvolumen entspricht, das um den Verstellweg des Hilfs-Stellkolbens 68 größer als das der ersten rechten Verstellbereichsgrenze entsprechende minimale Verdrängungsvolumen ist.

Die Steuereinrichtung 11 ist ein schaltendes 3/2-Wegeventil mit zwei Arbeitsanschlüssen P und S an die zur Positioniereinrichtung 10 und zur zweiten Stelldruckanschlußleitung 54 führenden Leitungsabschnitte 70,71 bzw. 70,72 der Hilfsstelldruckleitung 70 und mit einem Arbeitsanschluß T an ein zum Tank 16 führendes Leitungsstück 73. Das 3/2-Wegeventil 11 ist durch eine Druckfeder 74 in der in der Figur gezeigten Schließstellung gehalten, in der die Arbeitsanschlüsse P und T miteinander verbunden sind und der verbleibende Anschluß S gesperrt ist. Das 3/2-Wegeventil 11 weist zwei einander gegenüberliegende Steueranschlüsse auf, deren einer über eine erste Steuerleitung 75 an die erste Stelldruckanschlußleitung 50 und deren anderer über eine zweite Steuerleitung 76 an den Hilfsstelldruckleitungsabschnitt 70,72 angeschlossen ist. Der Druck in der zweiten Steuerleitung 76 beaufschlagt das 3/2-Wegeventil 11 in Richtung Offenstellung, in der die Arbeitsanschlüsse P und S miteinander verbunden und der Anschluß T gesperrt ist. Das 3/2-Wegeventil 11 weist ferner einen Proportionalmagneten 77 auf, der über eine an den Mikrocontroller 13 angeschlossene Steuersignalleitung 78 mit einem die erste Gangstufe des nachgeschalteten Getriebes 3 kennzeichnenden Steuersignal ansteuerbar ist und im angesteuerten Zustand das 3/2-Wegeventil 11 in der Schließstellung hält. Das Steuersignal wird von einem dem Gangstufenschalter 12 zugeordneten Potentiometer (nicht gezeigt) bei Einlegen der ersten Gangstufe erzeugt und über eine Gangstufen-Signalleitung 79 dem Mikrocontroller 13 zugeführt.

Der Mikrocontroller 13 ist über zwei Schaltsignalleitungen 80,81 mit je einem Schaltantrieb 82,83 zum Schalten des Getriebes 3 in die erste bzw. in die zweite Gangstufe verbunden. Ein Drehzahlsensor 84 zum Erfassen der Ausgangsdrehzahl des Hydromotors 2 bzw. der Eingangsdrehzahl des Getriebes 3 ist über eine Signalleitung 85 an den Mikrocontroller 13 angeschlossen.

Die Inchpedaleinrichtung 14 umfaßt ein herkömmliches Inchpedal 86 mit einem die jeweilige Stellung dieses Pedals erfassenden Potentiometer 87, das über eine weitere Signalleitung 88 an den Mikrocontroller 13 angeschlossen ist.

Die Funktion des erfindungsgemäßen hydrostatischen Getriebes ist wie folgt: Bei stehendem Fahrzeug befinden sich das Fahrtrichtungsventil 4 und das Bremsventil 5 in ihrer jeweiligen Mittelstellung, so daß die angetriebene Hydropumpe 1 über die Leitungsstücke 26,27 in den Tank 16 fördert und der Hydromotor 2 dementsprechend nicht angetrieben wird. Die Arbeitsleitungsabschnitte 17,21; 17,22; 18,24; 18,25 und damit auch die Stelldruckanschlußleitungen 50,54, die Stelldruckleitung 47 sowie die Stelldruckzweigleitung 64 sind drucklos, so daß das 3/2-Wegeventil 11 durch die Druckfeder 74 und den Proportionalmagneten 77, der mit dem die erste Gangstufe des Getriebes 3 kennzeichnenden Steuersignal angesteuert ist, in der Schließstellung sowie das Regelventil 9 durch die Feder 63 in der Ausgangsstellung gehalten sind. Infolgedessen ist der Druckraum 69 der Positioniereinrichtung 10 über das Leitungsstück 73 zum Tank 16 hin entlastet, so daß der Hilfs-Stellkolben 68 seine Ausgangsstellung einnimmt. Die Verstellbereichsgrenzen der Stelleinrichtung 8 sind somit durch deren Stirnwände festgelegt. Ferner ist der zweite Druckraum 46 der Stelleinrichtung 8 über das Regelventil 9zum Tank 16 hin entlastet, so daß der Differentialkolben 42 unter dem Druck der Wegmeßfeder 67 an der in der Figur rechten Stirnwand (entsprechend der ersten rechten Verstellbereichsgrenze) der Stelleinrichtung 8 anliegt und der Hydromotor 2 auf ein entsprechendes Minimum-Verdrängungsvolumen eingestellt ist. In der Figur ist zur besseren Darstellung des zweiten Druckraums 46 ein geringer Abstand zwischen Stirnwand und Differentialkolben 42 eingezeichnet. Gleiches gilt sinngemäß für den Hilfs-Stellkolben 68.

Nach Umschalten des Fahrtrichtungsventils 4 in die obere Schaltstellung fördert die Hydropumpe 1 in die als Vorlaufleitung dienende erste Arbeitsleitung 17. Der sich dabei im Arbeitsleitungsabschnitt 17,21 aufbauende Arbeitsdruck wirkt über die Leitung 29 auf den Steuerkolben 28 des Bremsventils 5 und verschiebt diesen in die untere Endstellung, so daß das von der Hydropumpe 1 geförderte Druckmittel über den Durchflußkanal 31 im Bremsventil 5 zum Hydromotor 2 strömt und diesen antreibt. Auf diese Weise beginnt das Fahrzeug vorwärtszufahren. Der Druckmittelrücklauf zum Tank 16 erfolgt ungedrosselt über den Arbeitsleitungsabschnitt 18,25, den Durchflußkanal 32 im Bremsventil 5 und die Arbeitsleitungsabschnitte 18,24 und 18,23.

Der im Arbeitsleitungsabschnitt 17,21 herrschende Arbeitsdruck wirkt gleichzeitig über das Wechselventil 51 und die Stelldruckzweigleitung 64 als Regeldruck auf das Regelventil 9 und verschiebt dieses in Richtung Endstellung, sobald die hydraulische Kraft des Regeldrucks die Kraft der Feder 63 übersteigt. Das Regelventil 9 stellt die Verbindung zwischen den Stelldruckleitungsabschnitten 47,48 und 47,49 her, so daß das Druckmittel im Arbeitsleitungsabschnitt 17,21 über das geöffnete Rückschlagventil 59 als Stelldruckmittel in den zweiten Druckraum 46 einströmt und bei ausreichendem Druck den Differentialkolben 42 unter zunehmender Belastung der Wegmeßfeder 67 in Richtung der in der Figur linken Verstellbereichsgrenze und damit in Richtung des maximalen Verdrängungsvolumens des Hydromotors 2 verschiebt. Sobald die Federkräfte der Feder 63 und der Wegmeßfeder 67 mit der hydraulischen Kraft des Regeldrucks im Gleichgewicht sind, ist der Regelpunkt erreicht, d.h. das Regelventil 9 und der Differentialkolben 42 nehmen jeweils eine der Größe des Regeldrucks entsprechende Stellung ein, die einer Verdrängungsvolumen-Einstellung des Hydromotors 2 auf ein größeres als das minimale Verdrängungsvolumen entspricht. Da der Arbeitsdruck beim Anfahren des Fahrzeugs, d.h. beim Beschleunigen, größer als bei nicht beschleunigter Fahrt ist, nimmt das Regelventil 9 im allgemeinen seine Endstellung ein, so daß der Differentialkolben 42 an der in der Figur linken Stirnwand des Stellzylinders anliegt und der Hydromotor 2 somit auf maximales Verdrängungsvolumen ausgeschwenkt ist. Mit abnehmendem Arbeitsdruck, wie er etwa bei nicht beschleunigter Fahrt auftritt,wird durch entsprechendes Zurückstellen des Regelventils 9 und des Differentialkolbens 42 in Richtung Ausgangsstellung bzw. in Richtung der in der Figur rechten Verstellbereichsgrenze der Hydromotor 2 auf ein entsprechend verringertes Verdrängungsvolumen einschließlich des minimalen Verdrängungsvolumens - der maximale Verstellbereich des Differentialkolbens 42 steht zur Verfügung - zurückgeschwenkt.

Sobald die Ausgangsdrehzahl des Hydromotors 2 bzw. die Eingangsdrehzahl des Getriebes 3 die im Mikrocontroller 13 gespeicherte Grenzdrehzahl zwischen der ersten und zweiten Gangstufe erreicht hat und letztere Gangstufe mit dem Gangstufenschalter 12 vorgewählt ist, steuert der über die Signalleitung 85 ständig vom Drehzahlsensor 84 mit der Drehzahlinformation versorgte und diese mit der Grenzdrehzahl vergleichende Mikrocontroller 13 über die entsprechende Schaltsignalleitung 80 bzw. 81 den entsprechenden Schaltantrieb 82 bzw. 83 ein und schaltet das Getriebe 3 in die zweite Gangstufe. Gleichzeitig entfällt die Ansteuerung des 3/2-Wegeventils 11 mit dem die erste Gangstufe kennzeichnenden Steuersignal. Da jedoch im Lastbetrieb der gleiche Arbeitsdruck in den Arbeitsleitungsabschnitten 17,21 und 17,22 und somit hydraulisches Druckgleichgewicht am 3/2-Wegeventil 11 herrscht, verbleibt dieses unter dem Druck der Druckfeder 74 in seiner Schließstellung und damit der Hilfs-Stellkolben 68 der Positioniereinrichtung 10 in seiner Ausgangsstellung. Die Verstellbereichsgrenzen der Stelleinrichtung 8 sind weiterhin durch deren Stirnwände festgelegt.

Sobald die Ausgangsdrehzahl des Hydromotors 2 bzw. die Eingangsdrehzahl des Getriebes 3 eine vorbestimmte, im Mikrocontroller 13 gespeicherte maximal zulässige Drehzahl erreicht, steuert letzterer zwecks Drehzahlbegrenzung den Proportionalmagneten 66 an und übersteuert auf diese Weise das Regelventil 9 in Richtung seiner Endstellung, so daß der Differentialkolben 42 in Richtung seiner in der Figur linken Verstellbereichtsgrenze zurückgestellt und damit der Hydromotor auf größeres Verdrängungsvolumen ausgeschwenkt wird. Statt des Regelventils kann in alternativer Ausführung auch die Steuereinrichtung zwecks Drehzahlbegrenzung mit einem entsprechenden elektrischen oder hydraulischen Steuersignal angesteuert werden, so daß der Hilfsstelldruck den Differentialkolben 42 indirekt über den Hilfs-Stellkolben 68 oder durch direkte Beaufschlagung in Richtung seiner in der Figur linken Verstellbereichsgrenze zurückstellt und damit den Hydromotor 2 auf größeres Verdrängungsvolumen ausschwenkt.

Beim Wechsel von der zweiten zurück in die erste Gangstufe, die in entsprechender Weise wie der vorbeschriebene Wechsel von der ersten in die zweite Gangstufe erfolgt, wird der Proportionalmagnet 66 durch den Mikrocontroller 13 angesteuert und der Hydromotor 2, falls er ausgeschwenkt ist, auf minimales Verdrängungsvolumen zurückgeschwenkt, bevor der Mikrocontroller 13 den entsprechenden Schaltantrieb ansteuert und das Getriebe 3 in die erste Gangstufe schaltet.

Unterhalb der maximal zulässigen Drehzahl kann das Fahrzeug jederzeit durch Betätigung des Inchpedals 86 aktiv abgebremst werden. In diesem Fall erzeugt das Potentiometer 87 ein der Stellung des Inchpedals entsprechendes Steuersignal, das vom Mikrocontroller 13 in einen Steuerstrom umgesetzt wird, der den Proportionalmagneten 66 ansteuert und das Regelventil 9 in Richtung Endstellung übersteuert, so daß der Differentialkolben 42 in Richtung der in der Figur linken Verstellbereichsgrenze zurückgestellt und der Hydromotor 2 auf größeres Verdrängungsvolumen ausgeschwenkt wird. Durch Betätigung des Inchpedals 86 über diejenige Stellung hinaus, bei der der Hydromotor 2 auf maximales Verdrängungsvolumen ausgeschwenkt ist, kann die mechanische Bremse des Fahrzeugs betätigt werden.

Die soeben beschriebenen Vorgänge laufen ebenfalls bei Rückwärtsfahrt des Fahrzeugs lediglich mit dem Unterschied ab, daß das Fahrtrichtungsventil 4 die untere Schaltstellung sowie das Bremsventil 5 die obere Endstellung einnehmen und der Arbeitsdruck in der nun als Vorlaufleitung dienenden zweiten Arbeitsleitung 18 herrscht, während der Druckmittelrücklauf über die erste Arbeitsleitung 17 erfolgt.

Bei Überschreiten des jeweils an den Druckbegrenzungsventilen 6,7 eingestellten Wertes wird der Druck im jeweils höher belasteten Arbeitsleitungsabschnitt 17,22; 18,25 über das Druckbegrenzungsventil 6 bzw. 7 zum Tank 16 hin entlastet.

Sobald das Fahrzeug vom vorstehend beschriebenen Lastbetrieb in den Schubbetrieb wechselt, wenn also der Antrieb des Hydromotors 2 nicht durch die Hydropumpe 1 erfolgt, sondern von den Fahrzeugrädern übernommen wird, etwa bei Bergabfahrt, bei Leerlauf des Dieselmotors oder beim aktiven Bremsen mittels des Inchpedals 86, fällt der Arbeitsdruck in der jeweils als Vorlaufleitung dienenden Arbeitsleitung 17 (bei Vorwärtsfahrt) bzw. 18 (bei Rückwärtsfahrt) und damit auch in der Leitung 29 bzw. 30 ab. Das auf diese Weise hydraulisch druckentlastete Bremsventil 5 nimmt unter der Wirkung seiner Federzentrierung die Bremsstellung ein. In dieser Stellung fördert der von den Fahrzeugrädern angetriebene, als Pumpe wirkende Hydromotor 2 das über die jeweilige Vorlaufleitung 17 (bei Vorwärtsfahrt) bzw. 18 (bei Rückwärtsfahrt) einschließlich des jeweiligen Durchflußkanals 34 bzw. 35 angesaugte Druckmittel über die jeweils als Rücklaufleitung dienende Arbeitsleitung 18 (bei Vorwärtsfahrt) bzw. 17 (bei Rückwärtsfahrt) einschließlich des jeweiligen Durchflußkanals 36 bzw. 33 im Bremsventil 5 zum Tank 16. Dabei baut sich im jeweiligen Arbeitsleitungsabschnitt 18,25 bzw. 17,22 ein der Drosselwirkung des jeweiligen Durchflußkanals 36 bzw. 33 entsprechender Staudruck auf, der den Hydromotor 2 abbremst. Da das Druckmittel nach dem drosselnden Durchflußkanal 36 bzw. 33 nahezu drucklos über den Arbeitsleitungsabschnitt 18,24 bzw. 17,21 zum Tank 16 abströmt, sind die Steuerleitungen 30 bzw. 29 sowie die erste Stelldruckanschlußleitung 50 und die Stelldruckzweigleitung 64 ebenfalls drucklos.

Auf diese Weise bleibt nicht nur das Bremsventil 5 während der Dauer des Schubbetriebs in der Bremsstellung, sondern es entfällt auch die während des Lastbetriebs des hydrostatischen Getriebes den Rückschwenkkräften des Triebwerks des Hydromotors 2 entgegenwirkende Druckmittelbeaufschlagung des Regelventils 9 und des Differentialkolbens 42 über das Wechselventil 51. Stattdessen wird der Proportionalmagnet 66 des Regelventils 9 vom Mikrocontroller 13 mit einem der Drehzahl des Hydromotors 2 proportionalen Steuersignal angesteuert und dementsprechend das Regelventil 9 sowie der Differentialkolben 42 in der gleichen Weise wie bei Ansteuerung durch den Arbeitsdruck im Lastbetrieb in Richtung Endstellung bzw. in Richtung der in der Figur linken Verstellbereichsgrenze verstellt. Auf diese Weise wird der Hydromotor 2 auf ein seiner jeweiligen Drehzahl entsprechendes Verdrängungsvolumen einschließlich des maximalen Verdrängungsvolumens (bei maximal zulässiger Drehzahl) ausgeschwenkt.

Im gesamten Schubbetrieb wird das 3/2-Wegeventil 11 hydraulisch lediglich über den Hilfs-Stelldruckleitungsabschnitt 70,72 und die zweite Steuerleitung 76 mit dem Staudruck im jeweiligen Rücklaufleitungsabschnitt 18,25 bzw. 17,22 angesteuert; die Ansteuerung über die erste Steuerleitung 75 entfällt, da in der ersten Stelldruckanschlußleitung 50 nahezu kein Druck herrscht.

Bei eingeschalteter erster Gangstufe des Getriebes 3 wird das 3/2-Wegeventil 11 über die Steuersignalleitung 78 mit dem diese Gangstufe kennzeichnenden Steuersignal angesteuert und verbleibt auf diese Weise in seiner Schließstellung. Dementsprechend nimmt auch der Hilfs-Stellkolben 68 weiterhin seine Ausgangsstellung ein, so daß für die Verstellung des Differentialkolbens 42 und damit die Einstellung des Verdrängungsvolumens des Hydromotors 2 der maximale Verstellbereich mit den Stirnwänden des Stellzylinders 8 als Verstellbereichsgrenzen zur Verfügung.

Bei Umschalten des Getriebes 3 in die zweite Gangstufe entfällt die Ansteuerung des 3/2-Wegeventils 11 mit dem die erste Gangstufe kennzeichnenden Steuersignal. Der Staudruck verstellt daraufhin über den Hilfsstelldruckleitungsabschnitt 70,72 und die zweite Steuerleitung 76 das 3/2-Wegeventil 11 in seine Offenstellung und beaufschlagt über die Hilfsstelldruckleitung 70 den Hilfs-Stellkolben 68 und verschiebt diesen in seine Endstellung. In dieser Endstellung definiert der Hilfs-Stellkolben 68 die zweite rechte Verstellbereichsgrenze. Auf diese Weise ist die der Einstellung des Hydromotors 2 auf minimales Verdrängungsvolumen entsprechende Verstellbereichsgrenze in Richtung größeren Verdrängungsvolumens verstellt. Das minimale Verdrängungsvolumen des Hydromotors 2 bei Beginn des Bremsvorganges ist in der zweiten Gangstufe somit größer als in der ersten Gangstufe und zwar vorzugsweise um soviel, daß der sich beim Umschalten von der ersten in die zweite Gangstufe ergebende Bremsmoment-Verlust durch entsprechendes Ausschwenken des Hydromotors 2 und damit Vergrößern des aufgebrachten Bremsmomentes ausgeglichen wird. Der Bremsvorgang beginnt in der zweiten Gangstufe zumindest mit dem gleichen Bremsmoment wie in der ersten Gangstufe.

Die Drosselstellen 60 und 61 verzögern und dämpfen die Druckmittelströmung zur Stelleinrichtung 8 und verhindern auf diese Weise nicht nur einen zu schnellen Aufbau des Staudrucks im jeweiligen Arbeitsleitungsabschnitt 18,25 bzw. 17,22, sondern insbesondere ein ungedämpftes Durchschlagen von Bremsdruckschwankungen, hervorgerufen durch z.B. Schwankungen der Fahrwiderstände oder der abgenommenen Leistung, auf das Regelventil 9 und die Stelleinrichtung 8.

## Patentansprüche

1. Hydrostatisches Getriebe mit wenigstens einer Hydropumpe (1) und wenigstens einem verstellbaren Hydromotor (2), der an zwei Arbeitsleitungen (17,18) angeschlossen ist, von denen wenigstens eine zur Hydropumpe führt, und mit einer zwischen zwei Verstellbereichsgrenzen verstellbaren Stelleinrichtung (8) zur Einstellung des Verdrängungsvolumens des Hydromotors, wobei die Verstellbereichsgrenzen der Einstellung des Hydromotors auf ein minimales und auf ein maximales Verdrängungsvolumen entsprechen, **gekennzeichnet**
- durch eine mit einem Stellsignal ansteuerbare Positioniereinrichtung (10) zum Verstellen wenigstens einer der Verstellbereichsgrenzen, und
- durch eine Steuereinrichtung (11) zur Einstellung des Stellsignals im Schubbetrieb des hydrostatischen Getriebes, wobei für eine Erhöhung der Bremswirkung die Positioniereinrichtung (10) die verstellbare Verstellbereichsgrenze in Richtung Vergrößerung des Verdrängungsvolumens des Hydromotors (2) verstellt.

2. Hydrostatisches Getriebe nach Anspruch 1,
**dadurch gekennzeichnet,**
daß die verstellbare Verstellbereichsgrenze der Stelleinrichtung (8) der Einstellung des Hydromotors (2) auf minimales Verdrängungsvolumen entspricht.

3. Hydrostatisches Getriebe nach Anspruch 1 oder 2, wobei die Stelleinrichtung (8) als Stellzylinder mit einem mit dem Stellglied (44) des Hydromotors (2) verbundenen Stellkolben (42) ausgebildet ist,
**dadurch gekennzeichnet,**
daß die Positioniereinrichtung (10) ein Hilfs-Stellzylinder mit einem Hilfs-Stellkolben (68) ist, der als Anschlag für den Stellkolben (42) der Stelleinrichtung (8) dient und mit einem das Stellsignal darstellenden Hilfsstelldruck in einer Hilfsstelldruckleitung (70) beaufschlagbar ist.

4. Hydrostatisches Getriebe nach Anspruch 3,
**dadurch gekennzeichnet,**
daß der Hilfs-Stellkolben (68) mit dem Hilfsstelldruck in Richtung Vergrößerung des Verdrängungsvolumens des Hydromotors (2) beaufschlagbar ist.

5. Hydrostatisches Getriebe nach wenigstens einem vorhergehenden Anspruch, das mit einem weiteren Getriebe (3) mit veränderlichem Übersetzungsverhältnis gekoppelt ist,
**gekennzeichnet durch** Einstellung des Stellsignals durch die Steuereinrichtung (11) in Abhängigkeit vom jeweiligen Übersetzungsverhältnis des weiteren Getriebes (3).

6. Hydrostatisches Getriebe nach Anspruch 5,
**dadurch gekennzeichnet,**
daß das weitere Getriebe (3) ein mechanisches Stufengetriebe mit zwei Gangstufen ist, daß die Steuereinrichtung (11) ein Wegeventil mit einer Offen- und einer Schließstellung ist, das Arbeitsanschlüsse (P,S) an die Hilfsstelldruckleitung (70) aufweist, die in der Offenstellung geöffnet und in der Schließstellung gesperrt sind und das über einen Steueranschluß (77) mit einem die erste Gangstufe des mechanischen Getriebes (3) kennzeichnenden Steuersignal in einer Steuersignalleitung (78) in Richtung Schließstellung ansteuerbar ist.

7. Hydrostatisches Getriebe nach Anspruch 6,
**dadurch gekennzeichnet,**
daß die Steuersignalleitung (78) zu einem Gangstufenschalter (12) führt.

8. Hydrostatisches Getriebe nach Anspruch 7,
**dadurch gekennzeichnet,**
daß die Steuersignalleitung (78) über einen Mikrocontroller (13) zum Gangstufenschalter (12) führt.

9. Hydrostatisches Getriebe nach Anspruch 8,
**dadurch gekennzeichnet,**
daß der Mikrocontroller (13) über Schaltsignalleitungen (80,81) mit Schaltantrieben (82,83) zum Schalten des weiteren Getriebes (3) in die erste und zweite Gangstufe verbunden ist.

10. Hydrostatisches Getriebe nach wenigstens einem der Ansprüche 6 - 9, mit einem in den Arbeitsleitungen (17,18) angeordneten Bremsventil (5), das bei Schubbetrieb des hydrostatischen Getriebes jeweils eine der Arbeitsleitungen (17 bzw. 18) zumindest teilweise schließt,
**dadurch gekennzeichnet,**
daß das Wegeventil (11) zwei weitere Steueranschlüsse aufweist, deren einer über eine erste Steuerleitung (75) mit den Arbeitsleitungsabschnitten (17,21; 18,24) zwischen dem Bremsventil (5) und der Hydropumpe (1) und deren anderer über eine zweite Steuerleitung (76) mit den Arbeitsleitungsabschnitten (17,22; 18,25) zwischen dem Bremsventil (5) und dem Hydromotor (2) angeschlossen ist, und daß der Steuerdruck in der zweiten Steuerleitung (76) das Wegeventil (11) entgegen dem Steuerdruck in der ersten Steuerleitung (75) in Richtung Offenstellung beaufschlagt.

11. Hydrostatisches Getriebe nach Anspruch 10,
**dadurch gekennzeichnet,**
daß die Stelleinrichtung (8) mit einem Stelldruck in einer Stelldruckleitung (47) beaufschlagbar ist, die über eine erste Stelldruckanschlußleitung (50) an die Arbeitsleitungsabschnitte (17,21; 18,24) zwischen Bremsventil (5) und Hydropumpe (1) und über eine zweite Stelldruckanschlußleitung (54) an die Arbeitsleitungsabschnitte (17,22; 18,25) zwischen Bremsventil (5) und Hydromotor (2) angeschlossen ist, und daß die erste Steuerleitung (75) an die erste Stelldruckanschlußleitung (50) und die zweite Steuerleitung (75) an die zur zweiten Stelldruckanschlußleitung (54) führende Hilfsstelldruckleitung (70) angeschlossen ist.

12. Hydrostatisches Getriebe nach Anspruch 11,
**dadurch gekennzeichnet,**
daß in der ersten Stelldruckanschlußleitung (50) ein in Richtung der Arbeitsleitungsabschnitte (17,21; 18,24) sperrendes Rückschlagventil (59) angeordnet ist.

## Claims

1. Hydrostatic transmission having at least one hydraulic pump (1) and at least one adjustable hydraulic motor (2), which is connected to two working lines (17, 18) of which at least one leads to the hydraulic pump, and having an adjustable setting device (8), adjustable between two adjustment range limits for setting the displacement volume of the hydraulic motor, the adjustment range limits corresponding to the setting of the hydraulic motor to a minimum and to a maximum displacement volume,
characterized by,
a positioning device (10), controllable with a regulating signal for varying of at least one of the adjustment range limits,
and by,
a control device (11) for setting the regulating signal in overrun operation of the hydrostatic transmission, the positioning device (10) varying the variable adjustment range limit in a direction towards an increase of the displacement volume of the hydraulic motor (2) in order to increase the braking effect.

2. Hydrostatic transmission according to claim 1,
characterized in that,
the variable adjustment range limit of the setting device (8) corresponds to the setting of the hydraulic motor (2) to a minimum displacement volume.

3. Hydrostatic transmission according to claim 1 or 2, the setting device (8) being formed as a setting cylinder having a setting piston (42) connected with the setting member (44) of the hydraulic motor (2),
characterized in that,
the positioning device (10) is an auxiliary setting cylinder having an auxiliary setting piston (68) which serves as a stop for the setting piston (42) of the setting device (8) and which can be acted upon by an auxiliary setting pressure, in an auxiliary setting pressure line (70), representing the regulating signal.

4. Hydrostatic transmission according to claim 3,
characterized in that,
the auxiliary setting piston (68) can be acted upon by the auxiliary setting pressure in a direction towards an increase of the displacement volume of the hydraulic motor (2).

5. Hydrostatic transmission according to any preceding claim, being coupled with a further transmission (3) having a variable transmission ratio,
characterized by,
setting of the regulating signal by means of the control device (11) in dependence upon the respective transmission ratio of the further transmission (3).

6. Hydrostatic transmission according to claim 5,
characterized in that,
the further transmission (3) is a mechanical stepped transmission having two gear steps,
in that,
the control device (11) is a directional control valve having an open and a closed position, having working connections (P, S) to the auxiliary setting pressure line (70) which are open in the open position and blocked in the closed position, and being controllable in the direction of the closed position, by way of a control connection (77), with a control signal in a control signal line (78) indicating the first gear step of the mechanical transmission (3).

7. Hydrostatic transmission according to claim 6,
characterized in that,
the control signal line (78) leads to a gear step switch (12).

8. Hydrostatic transmission according to claim 7,
characterized in that,
the control signal line (78) leads to the gear step switch (12) via a microcontroller (13).

9. Hydrostatic transmission according to claim 8,
characterized in that,
the microcontroller (13) is connected via switching signal lines (80, 81) with switching drives (82, 83) for switching the further transmission (3) into the first and second gear steps.

10. Hydrostatic transmission according at least one of claims 6 to 9, having a brake valve (5) arranged in the working lines (17, 18) which valve at least partially closes in each case one of the working lines (17 or 18) upon overrun operation of the hydrostatic transmission,
characterized in that,
the directional control valve (11) has two further control connections of which one is connected via a first control line (75) with the working line sections (17, 21; 18, 24) between the brake valve (5) and the hydraulic pump (1) and of which the other is connected via a second control line (76) with the working line sections (17, 22; 18, 25) between the brake valve (5) and the hydraulic motor (2),
and in that,
the control pressure in the second control line (76) acts upon the directional control valve (11) counter to the control pressure in the first control line (75) in the direction towards the open position.

11. Hydrostatic transmission according to claim 10,
characterized in that,
the setting device (8) can be acted upon with a setting pressure in a setting pressure line (47) which is connected via a first setting pressure connection line (50) to the working line sections (17, 21; 18, 24) between brake valve (5) and hydraulic pump (1) and via a second setting pressure connection line (54) is connected to the working line sections (17, 22; 18, 25) between brake valve (5) and hydraulic motor (2),
and in that,
the first control line (75) is connected to the first setting pressure connection line (50) and the second control line (75) is connected to the auxiliary setting pressure line (70) leading to the second setting pressure connection line (54).

12. Hydrostatic transmission according to claim 11,
characterized in that,
a non-return valve (59), blocking in the direction towards the working line sections (17, 21; 18, 24), is arranged in the first setting pressure connection line (50).

## Revendications

1. Transmission hydrostatique avec au moins une pompe hydraulique (1) et au moins un moteur hydraulique (2) réglable, qui est raccordé à deux conduites de travail (17, 18), dont l'une au moins mène à la pompe hydraulique, et avec un dispositif de réglage (8) réglable entre deux plages limites de réglage pour le réglage du volume de déplacement du moteur hydraulique, dans laquelle les plages limités du réglage du moteur hydraulique correspondent à un volume de déplacement minimal et un volume de déplacement maximal, caractérisée
- par un dispositif de positionnement (10) commandé au moyen d'un signal de réglage, en vue du réglage d'au moins l'une des plages limites, et
- par un dispostif de commande (11) pour le réglage du signal de réglage dans le fonctionnement en poussée de la transmission hydrostatique, le dispositif de positionnement (10) déplaçant la plage limite réglable dans le sens d'une augmentation du volume de déplacement du moteur hydraulique (2), pour augmenter l'effet de freinage.

2. Transmission hydrostatique selon la revendication 1, caractérisée en ce que la plage limite de réglage réglable du dispositif de réglage (8) correspond au réglage du moteur hydraulique (2) sur le volume de déplacement minimal.

3. Transmission hydrostatique selon la revendication 1 ou 2, dans laquelle le dispositif de réglage (8) est conçu sous la forme d'un vérin avec un piston de réglage (42) relié à l'organe de réglage (44) du moteur hydraulique (2), caractérisée en ce que le dispositif de positionnement (10) est un vérin auxiliaire avec un piston de réglage auxiliaire (68), qui sert de butée au piston de réglage (42) du dispositif de réglage (8) et qui peut être alimenté avec une pression de réglage auxiliaire représentant le signal de réglage, dans une conduite de pression de réglage auxiliaire (70).

4. Transmission hydrostatique selon la revendication 3, caractérisée en ce que le piston de réglage auxiliaire (68) peut être alimenté avec la pression de réglage auxiliaire dans le sens d'une augmentation du volume de déplacement du moteur hydraulique (2).

5. Transmission hydrostatique selon l'une au moins des revendications précédentes, qui est couplée avec une autre transmission (3) à rapport de transmission variable, caractérisée par réglage du signal de réglage par le dispositif de réglage (11) en fonction du rapport de transmission respectif de l'autre transmission (3).

6. Transmission hydrostatique selon la revendication 5, caractérisée en ce que l'autre transmission (3) est une boîte de vitesses mécanique à rapport fixes avec deux rapports de vitesse, en ce que le dispositif de commande (11) est une vanne de distribution avec une position ouverte et une position fermée, qui comporte des raccords de travail (P, S) à la conduite de pression de réglage auxiliaire (70), qui sont ouverts en position ouverte et fermés en position fermée et qui peut être commandée dans le sens de la position fermée, par l'intermédiaire d'un raccord de commande (77) avec un signal de commande caractérisant le premier rapport de vitesse de la boîte de vitesses mécanique (3), dans une ligne de signaux de commande (78).

7. Transmission hydrostatique selon la revendication 6, caractérisée en ce que la ligne de signaux de commande (78) mène à un sélecteur de rapport de vitesse (12).

8. Transmission hydrostatique selon la revendication 7, caractérisée en ce que la ligne de signaux de commande (78) mène par un microcontrôleur (13) au sélecteur de rapport de vitesse (12).

9. Transmission hydrostatique selon la revendication 8, caractérisée en ce que le microcontrôleur (13) est relié, par des lignes de signaux de commutation (80, 81), à des mécanismes de commutation (82, 83) pour la commande de l'autre transmission (3) dans le premier et le deuxième rapport de vitesse.

10. Transmission hydrostatique selon l'une au moins des revendications 6 à 9, avec une soupape de freinage (5) placée dans les conduites de travail (17, 18), qui en fonctionnement en poussée de la transmission hydrostatique, ferme chaque fois l'une des conduites de travail (17 ou 18) au moins en partie, caractérisée en ce que la vanne de distribution (11) comporte deux autres raccords de commande dont un est raccordé, par une première conduite de commande (75), aux portions de conduite de travail (17, 21 ; 18, 24), entre la soupape de freinage (5) et la pompe hydraulique (1) et dont l'autre est raccordée, par une deuxième conduite de commande (76), aux portions de conduite de travail (17, 22 ; 18, 25), entre la soupape de freinage (5) et le moteur hydraulique (2), et en ce que la pression de commande dans la deuxième conduite de commande (76) sollicite la vanne de distribution (11), à l'encontre de la pression de commande dans la première conduite de commande (75), dans le sens de la position ouverte.

11. Transmission hydrostatique selon la revendication 10, caractérisée en ce que le dispositif de réglage (8) peut être alimenté avec une pression de réglage dans une conduite de pression de réglage (47), qui est raccordée, par une première conduite de raccord de pression de réglage (50), aux portions de conduite de travail (17, 21 ; 18, 24), entre la soupape de freinage (5) et la pompe hydraulique (1) et, par une deuxième conduite de raccord de pression de réglage (54), aux portions de conduite de travail (17, 22 ; 18, 25), entre la soupape de freinage (5) et le moteur hydraulique (2), et en ce que la première conduite de commande (75) est raccordée à la conduite de raccord de pression de réglage (50) et la deuxième conduite de commande (75) à la conduite de pression de réglage auxiliaire (70), menant à la deuxième conduite de raccord de pression de réglage (54).

12. Transmission hydrostatique selon la revendication 11, caractérisée en ce qu'il est prévu dans la première conduite de raccord de pression de réglage (50), un clapet anti-retour (59) se fermant en direction des portions de conduite de travail (17, 21 ; 18, 24).
